# EUROPÄISCHE PATENTSCHRIFT

(11) **EP 2 601 043 B1**
(45) Veröffentlichungstag und Bekanntmachung des Hinweises auf die Patenterteilung: **09.09.2015**
(21) Anmeldenummer: 11770687.9
(22) Anmeldetag: 26.07.2011
(51) Int. Cl.: B32B 5/18, B32B 25/10, B32B 25/16, D06N 3/10, D06N 3/14, D06N 3/18

(54) **FORMATZUSCHNITT**
ARTICLE CUT TO SIZE
DÉCOUPE AU FORMAT

(30) Priorität: 04.08.2010 DE 202010011015 U
(43) Veröffentlichungstag der Anmeldung: 12.06.2013
(73) Patentinhaber: LANXESS Deutschland GmbH, 50569 Köln (DE)
(72) Erfinder: Schaefer, Philipp, 30175 Hannover (DE)
(86) Internationale Anmeldenummer: PCT/EP2011/003725
(87) Internationale Veröffentlichungsnummer: WO 2012/016653

(56) Entgegenhaltungen:
- WO-A1-2009/106503
- DE-A1- 3 009 976
- DE-U1- 20 103 751
- DE-U1-202010 009 073

## Beschreibung

Die Erfindung betrifft einen mehrschichtigen Formatzuschnitt gemäß dem Oberbegriff des Anspruchs 1.

Derartige Formatzuschnitte werden derzeit als plattenförmige Körper hergestellt und können nicht in Form von Rollen, wie z.B. Kunstleder, produziert werden. Aufgabe der Erfindung ist es, einen mehrschichtigen Formatzuschnitt zu erstellen, der wie mehrschichtiges Kunstleder eingesetzt werden kann, aber darüber hinaus eine Reihe von Vorteilen bietet und Nachteile von Kunstleder reduziert oder ausschließt.

Von Kunstleder wird eine Stärke von mehr als 1,2 mm verlangt. Geschäumtes PVC-Kunstleder hat den Nachteil, dass es trotz seiner geschäumten Mittelschicht immer noch eine Dichte von mehr als 0,9 g/cm³ aufweist, dass es Weichmacher enthält, welche zum Emigrieren neigen, dass es bei Kälte versteift und bei erhöhten Temperaturen erweicht und dass es aufgrund seiner ausgeprägten thermoplastischen Eigenschaften über schlechte Thermo- Abriebseigenschaften verfügt. Ein Vorteil von Formatzuschnitten aus Kunstleder ist es, dass sie als Bahnenware preiswert hergestellt werden können.

Polyurethankunstleder mit einer Stärke von mehr als 1,2 mm besitzt entweder eine koagulierte Schaum-Mittelschicht oder eine mittels Treibmittel erzeugte Schaum-Mittelschicht. Sie sind leichter als PVC-Kunstleder bei gleicher Stärke und sind auch nicht sonderlich ausgeprägt thermoplastisch. Beim Einsatz hochwertiger hydrolysebeständiger Polyurethane sind die Kosten jedoch beträchtlich. Auch neigen PVC-Kunstleder bei Temperaturen von geringer als -10C° zum Versteifen. Die umweltfreundliche Herstellung als Bahnenware erfordert hohe Investitionen. Darüber hinaus sind PVC-Kunstleder und Polyurethankunstleder bezüglich ihrer Oberflächenausgestaltung begrenzt.

Mit der Erfindung soll die Aufgabe gelöst werden, ein mehrschichtiges Material mit einer Stärke von mehr als 1,2 mm zu schaffen, welches diese Nachteile nicht besitzt und bei dem eine beliebige Oberflächengestaltung mittels einer Silikonkautschukunterlage bzw. -matrize rasch und preiswert durchgeführt werden kann. Derartige Matrizen sind bei der Herstellung von Ledern und textilen Trägermaterialien bekannt, z.B. aus der US 4,983,245 und dem AT-GM 7989. Auf eine Silikonunterlage wird mittels eines Lasers oder durch Abformen die gewünschte Oberflächenstruktur eingearbeitet. Auf diese Unterlage wird sodann die für den Formatzuschnitt vorgesehene Oberflächenschicht, insbesondere Polyurethanschicht, aufgebracht und mit einem Träger verbunden.

Ein erfindungsgemäßer Formatzuschnitt soll bezüglich seines Materials wesentlich leichter sein und in einem breiten Temperaturbereich seine Biegesteifigkeit nicht oder nicht wesentlich verändern. Darüber hinaus soll er möglichst abriebsfest, schwer entflammbar, kälte- und wärmeisolierend sowie stoß- und schockabsorbierend und geräuschdämpfend wirken. Auch soll für bestimmte Einsatzzwecke die Wasserdichtigkeit des Formatzuschnittes gewährleistet sein. Ferner soll die Oberfläche des Formzuschnittes vielfältig gestaltbar sein, insbesondere soll die Oberfläche in ihrer Feinstruktur das Aussehen von Kohlenstoff- oder Glasfasergewebe aufweisen können.

Erfindungsgemäß werden diese Ziele bei einem Formatzuschnitt der eingangs genannten Art erreicht durch einen mehrschichtigen Formatzuschnitt, umfassend eine dünne, Kapillaren aufweisende Beschichtung (2) auf Polyurethanbasis, die mittels einer Polyurethankleberschicht (3) mit einem textilen Träger (4), der eine textile Trägerschicht ist, die mit einem Gewirke, Gewebe oder Vlies gebildet ist, verbunden ist, dadurch gekennzeichnet,
- dass der Träger (4) eine Stärke zwischen 0,25 und 1,2 mm besitzt,
- dass die verfestigte Polyurethankleberdispersion (3) ein Flächengewicht zwischen 65 und 155 g/m² aufweist und zwischen 0,02 und 0,55 mm in den Träger (4) eingelagert und an den textilen Fasern nicht filmbildend angebunden oder angelagert ist, sondern diese lediglich teilweise bis ganz ummantelt,
- dass die Beschichtung (2) eine Dicke von 0,09 bis 0,21 mm und eine Härte zwischen 25 und 55 Shore A aufweist,
- dass der Träger (4) an seiner der Beschichtung (2) gegenüberliegenden Seite mit einer Schicht (5) aus Polychloroprenschaum verbunden ist, der eine moosgummiartige, geschlossenzellige Struktur aufweist und eine Dichte zwischen 0,05 und 0,42 g/cm³, vorzugsweise zwischen 0,06 bis 0,28 g/cm³, wobei die Schicht (5) eine Stärke zwischen 1,0 und 4,5 mm besitzt und mit einem Polychloropren und/oder Polyurethan enthaltenden Klebstoff oder direkt bei ihrer Herstellung an dem Träger (4) angebunden ist.

Dazu tragen vor allem der Aufbau des Formatzuschnittes mit den einzelnen Schichten und das Zusammenwirken der einzelnen eingesetzten unterschiedlichen Schichten und Materialien bzw. die ausgebildeten Kapillaren bei.

Die dünne, weiche und nicht thermoplastische Beschichtung sorgt für extrem gute Abriebseigenschaften, insbesondere auch dadurch, dass ein Teil der vernetzten Kleberschicht mit der Beschichtung untrennbar verbunden ist bzw. einen Teil von ihr darstellt und der andere Teil der Kleberdispersion die eingesetzten textilen Fasern des Trägers ummantelt. Es wird im Bereich der textilen Fasern somit keine Schicht nach Art einer Folie oder eines Films ausgebildet, sondern es werden lediglich die textilen Fasern nicht filmbildend bzw. nicht folienbildend mit der Kleberschicht ganz oder teilweise ummantelt. Damit kommt es zu einer guten Verbindung zwischen der Beschichtung und dem Träger ohne eine Materialversteifung, weil die textilen Fasern nicht in einem Film vollständig eingebettet sind. Der Pölychloroprenschaum besitzt eine mikrofeine, geschlossenzellige, moosgummiartige Zellstruktur. Der Polychloroprenschaum enthält keine flüchtigen Weichmacher, ist kälte- und wärmebeständig, unbrennbar, sehr leicht und führt zu ausgezeichneten Isolationseigenschaften. Dies ergibt sich insbesondere daraus, dass sich zwischen der dünnen Beschichtung und dem Volumen des Polychloroprenschaumes der textile Träger befindet. Bei herkömmlichen Zuschnitten befindet sich der Schaum zwischen einer kompakten Oberschicht und dem textilen Träger auf der Unterseite.

Bei dem erfindungsgemäßen Formatzuschnitt erfolgt ein Aufbringen einer Polyurethandispersion im Sprühverfahren auf die negativ-oberflächenstrukturierte Silikonkautschukunterlage. Dadurch bilden sich an der Oberfläche der Beschichtung feine Kapillaren, die mit unbewaffnetem Auge nicht oder kaum sichtbar sind. Durch einen Sprühauftrag einer Polyurethankleberdispersion auf die Rückseite der Beschichtung werden die Kapillaren wieder weitgehend geschlossen und damit ein Eindringen von Wasser verhindert. Ein weiterer Teil der PUR-Kleberdispersion wird im Sprühverfahren oder mittels einer Walze auf den Träger appliziert, derart dass sich die PUR-Kleberdispersion nur an den Fasern des Trägers anlagert und die Zwischenräume im Gewirke bzw. im Gewebe bzw. Vlies, das den Träger ausbildet, weitgehend frei bleiben. Nach dem Trocknen der wärmeaktivierbaren PUR-Kleberdispersion auf der Beschichtungsrückseite und dem Trocknen der auf den textilen Träger aufgebrachten PUR-Kleberdispersion werden beide Seiten zusammengelegt und mittels Wärme und Druck zu einer Lage verbunden.

Im Folgenden wird die Erfindung anhand der Zeichnung beispielsweise näher erläutert. Fig. 1 zeigt einen Schnitt durch einen erfindungsgemäßen Formatzuschnitt. Fig. 2 zeigt eine Detailansicht einer Ausführungsvariante. Fig. 3 zeigt einen Schnitt durch eine bevorzugte Ausführungsform.

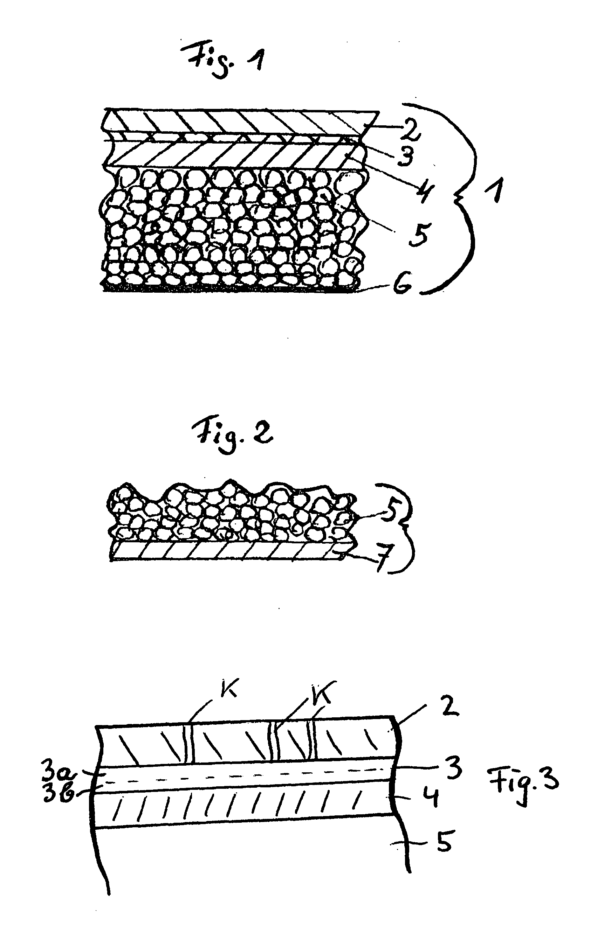

In Fig. 1 ist ein Schnitt durch einen mehrschichtigen Formatzuschnitt dargestellt. Dieser Formatzuschnitt 1 besitzt eine dünne, 0,09 bis 0,21 mm dicke Oberflächenbeschichtung 2, die mit einer Polyurethandispersion gebildet ist, die auf einer oberflächenstrukturierten Silikonkautschukunterlage als Negativabzug ausgebildet wurde. Vorzugsweise zeigt diese Unterlage im Negativ die Oberfläche eines Kohlenstoff- oder Glasfasergewebes. Dieses Negativ wird durch Abformung mit Silikonkautschuk gebildet und zeigt die negative Abbildung eines solchen Gewebes, insbesondere mit der jeweiligen Faserfeinstruktur. Diese Beschichtung 2 ist mittels einer Polyurethankleberdispersion 3 mit einem textilen Träger 4 verbunden. Die Polyurethankleberdispersion besitzt ein Flächengewicht zwischen 65 und 155 g/m². Diese Polyurethankleberdispersion 3 ist zwischen 0,02 und 0,55 mm in den Träger 4 in nicht filmbildender Weise eingelagert. Der Träger 4 ist an seiner der Beschichtung 2 gegenüberliegenden Seite mit einer Schicht 5 aus Polychloroprenschaum verbunden. Dieser Schaum besitzt eine moosgummiartige, geschlossenzellige Struktur und eine Dichte zwischen 0,05 und 0,42 g/cm³, vorzugsweise zwischen 0,06 bis 0,28 g/cm³.

An der Unterseite dieser Schicht 5 aus Polychloroprenschaumstoff kann eine dünne homogene Haut 6 aus dem selben Material mit einer Stärke zwischen 0,01 und 0,06 mm angebunden sein. Anstelle dieser Haut 6 kann auch eine textile Schicht 7 angebunden sein, so wie dies in Fig. 2 dargestellt ist. Diese textile Schicht 7 besitzt eine Stärke zwischen 0,15 und 0,95 mm.

Es ist von Vorteil, wenn die Beschichtung 2 zwischen 55 und 95 Gew.-%, vorzugsweise zwischen 68 und 87 Gew.-%, eine verfestigte, vernetzte Polyurethandispersion enthält und gegebenenfalls eine Dichte zwischen 0,9 und 1,12 g/cm³ aufweist. Damit werden die gewünschte Festigkeit und Abriebfestigkeit sowie Biegbarkeit des Formatzuschnittes gewährleistet.

Wenn der Träger 4 eine textile Trägerschicht ist und natürliche Fasern umfasst und gegebenenfalls elastomere Fasern enthält. Damit können die Stärke und Dehnbarkeit der Trägerschicht 4 sowie des Formatzuschnittes beeinflusst werden.

Um eine gute, weiche und flexible Verbindung zwischen der Polyurethankleberschicht 3 mit dem Träger 4 zu erreichen, ist vorgesehen, dass die gegebenenfalls mit einer vernetzten Polyurethandispersion gebildete Polyurethankleberschicht 3 zwischen 0,02 und 0,55 mm in den Träger 4 eingelagert und an den textilen Fasern nicht film bildend angebunden oder angelagert ist, sondern diese lediglich ummantelt.

Um der Schicht 5 aus Polychyloroprenschaum erhöhte Stärke und Biegsamkeit zu verleihen ist vorgesehen, dass die Schicht 5 aus Polychloroprenschaum eine Stärke zwischen 1,0 und 4,5 mm besitzt und mit einem Polychloropren und/oder Polyurethan enthaltenden Klebstoff oder direkt bei ihrer Herstellung an dem Träger 4 angebunden ist.

Es kann des weiteren vorgesehen sein, dass die Beschichtung 2 Pigment- und Silikonpartikel enthält.

Die Gestaltbarkeit des erfindungsgemäßen Formatzuschnittes ist groß und vielfältig. Es kann vorgesehen sein, dass die Oberfläche der Beschichtung 2 das Aussehen von Narben- oder Nubukleder oder das Aussehen von Textilien oder ein technisches Aussehen, vorzugsweise von Sandpapier oder von einem Waffelmuster, oder das Aussehen von direkt oder indirekt in eine Silikonkautschukunterlage gelaserten Strukturen und/oder von Logos zeigt. Es kann auch vorgesehen sein, dass zumindest zwei der unterschiedlichen Schichten 2, 3, 4, 5, 6 unterschiedliche Farben aufweisen. Möglich ist es auch, dass die Oberfläche des Formatzuschnittes unterschiedlich strukturiert ist und gegebenenfalls einen nubuklederartiges und einen kohlenstoffgewebeartiges Aussehen aufweisenden Bereich umfasst. Es ist auch möglich, der Oberfläche in ihrer Feinstruktur das Aussehen von Kohlenstoff- oder Glasfasergewebe zu verleihen.

Der erfindungsgemäße Formatzuschnitt bietet auch Vorteile in Hinblick auf seine Durchlässigkeit bezüglich Wasser und Wasserdampf. Es kann vorgesehen sein, dass im Formatzuschnitt Mikroperforationen ausgebildet sind, derart dass der Formatzuschnitt wasserdampf- und/oder luftdurchlässig aber trotzdem wasserdicht ist. Die mit Polyurethan und/oder mit Polychloroprenschaum gebildeten Schichten sind an sich wasserdicht, wasserdampfdicht und luftundurchlässig. Durch Ausbildung einer Mikroperforation kann Sorge dafür getragen werden, dass die Schichten wasserdampf- und/oder luftdurchlässig werden, aber noch immer wasserdicht sind.

Eine besonders vorteilhafte Ausführungsform des erfindungsgemäßen mehrschichtigen Formatzuschnittes ergibt sich, wenn gemäß Fig. 3 vorgesehen ist, dass die Polyurethanklebeschicht 3 zweilagig ausgebildet ist, wobei eine Lage 3a auf die Rückseite der Beschichtung 2 und die andere Lage 3b auf den Träger 4 vorzugsweise mit einer Walze oder durch Sprühen aufgetragen ist, und die beiden Lagen mittels Wärme und Druck verbunden sind. Damit wird eine einfache Herstellung des Formatzuschnittes möglich, wobei die Biegbarkeit des Formatzuschnittes gewahrt bleibt und die Wasserdampfdurchlässigkeit einstellbar ist.

Des Weiteren ist vorgesehen, dass die in der Beschichtung 2 ausgebildeten, insbesondere sichtbaren, Kapillaren K auf der Rückseite der Beschichtung 2 durch die auf diese aufgebrachte Lage der Polyurethanklebeschicht abgeschlossen sind. Diese Ausbildung ermöglicht eine Wasserdampfdurchlässigkeit der Beschichtung 2, ohne dass jedoch Wasser in die Trägerschicht des Formatzuschnittes eindringen kann.

Um die Beschichtung 2 wasserdampfdurchlässig, jedoch wasserdicht zu gestalten, kann erfindungsgemäß vorgesehen sein, dass die Beschichtung 2 Silikon und/oder Silikonpartikel, gegebenenfalls in einem Ausmaß von 1 bis 15 %, vorzugsweise 2 bis 11 %, des Gewichtes der Beschichtung 2 enthält, wobei das Silikon und/oder die Silikonpartikel als Emulsion und/oder Dispersion in der Beschichtung 2 vorliegen. Durch die Maßnahme, dass die Beschichtung 2 Silikon enthält, ist die Beschichtung 2 hydrophob, d.h. das Eindringen von Wasser in die offenen Kapillaren der Beschichtung wird verhindert, wogegen Wasserdampf entweichen kann.

Der erfindungsgemäße Formatzuschnitt besitzt hohe Biegefestigkeit und die für seinen Einsatz vorteilhafte Weichheit, wenn vorgesehen ist, dass die Polyurethanklebeschicht 3 mit einer wässrigen Polyurethandispersion gebildet ist, die im vernetzten Zustand eine Härte von weniger als 45 Shore A, vorzugsweise weniger als 35 Shore A, besitzt. Insbesondere werden diese Vorteile erhöht, wenn die Polyurethanklebeschicht (3) eine amorphe Struktur besitzt.

Für den Einsatz des mehrschichtigen Formatzuschnittes ist es von Vorteil, wenn die Beschichtung 2 frei von Weichmachern ist.

Der Anteil von Silikon und/oder Silikonpartikeln bietet die Gewähr für diese Eigenschaft der Beschichtung 2.

Der erfindungsgemäße Formatzuschnitt besitzt auf der Oberfläche, d.h. auf der Oberfläche der Beschichtung 2, sichtbare Kapillaren. Diese Kapillaren K werden bei der Erstellung der Beschichtung 2 durch die Polyurethanklebeschicht 3 weitgehend verschlossen bzw. bezüglich ihres Durchmessers verringert. Die Kapillaren K haben somit den Zweck im Oberflächenbereich des Formatzuschnittes den Wasserdampf- bzw. Wasserhaushalt zu regeln. Dies steht im Gegensatz zu Kapillaren, welche die gesamte auf den Träger 4 aufgebrachte Schicht durchdringen.

Gemäß der DE 30 09 976 A1 wird ein Neoprenschaum mit einem Jersey verbunden und das Jersey mit einem dünnen Polyurethanfilm. Der Neoprenschaum weist auf der Rückseite ein Jerseygewebe auf und auf der Oberfläche ist der dünne Polyurethanfilm direkt mit dem Neoprenschaum verbunden. Die Aufgabe ist hier Bahnenmaterial für die Herstellung von Taucheranzügen bzw. einen Taucheranzug zu erstellen. Das heißt, die Konfektionszuschnitte für den Anzug werden aus dem fertigen Material geschnitten. Bahnenmaterial wird aber prinzipiell anders hergestellt als Formatzuschnitte.

Gemäß dieser DE-A1 wird ein Polyurethanfilm aus einer Polyurethanlösung erzeugt, die organische Lösungsmittel, wie Dimethylformanid, Methyläthyikoten, Tuluol oder eine Mischung daraus enthält. Diese Polyurethanlösung wird auf ein glattes oder feinnarbiges Trennpapier mittels Rakel aufgetragen, denn ein Einsprühen ist nicht möglich. Nach dem Verdampfen der Lösungsmittel hat der Film eine Dicke von 0,01 - 0,05 mm. Der auf dem Trägerabziehpapier gebildete dünne Film wird mit einem PUR- oder Chloropren-Lösungsmittelkleber beschichtet. Unter Verdampfen der im Kleber enthaltenen Lösungsmittel wird der Film weitertransportiert und mit dem aufzubringenden Stretchgewebe versehen. Danach werden das Stretchgewebe und der Schaum oder der Schaum für sich, also beide ohne Klebstoff, auf dem Film aufgelegt. Danach erfolgt 48 Stunden ein Trocknen bei 30°C in einer Trockenmaschine, um eine vollständige Reaktion der Klebemittel herbeizuführen. Erst dann wird das Trennpapier abgezogen. Dieses umweltbelastende und teure Verfahren ist notwendig, weil das Trennpapier selbst nach unten und der geschlossenzellige Schaum nach oben keine Entfernung der Lösemittel zulassen. Dünne Filme von 0,01 bis 0,05 mm sind leichter zu handhaben, trocknen schneller als dickere Zurichtungen. In der DE-A1 findet sich aber kein Hinweis, wie dick der Klebstofffilm ist, der mit einer Walze auf den Polyurethanfilm appliziert wird und somit auch kein Hinweis, wie er im Gewebe vorliegt bzw. wie tief er in das Gewebe eingedrungen ist und die Fasern umschließt.

Die erfindungsgemäß aufgebrachte Beschichtung ist mindestes zwischen 9 bis 21 Mal dicker als der aus der DE-A1 bekannte Beschichtungsfilm und die Beschichtung wird auf einer beliebig strukturierten Silikonplatte hergestellt. Aufgrund dieser Herstellungsart kann die Beschichtung auf ihrer Oberfläche sichtbare Kapillaren aufweisen, die durch die Lage der aufgebrachten Polyurethanklebeschicht 3 weitgehend verschlossen werden, aber doch teilweise bestehen bleiben. Entsprechend wird die andere Lage der Klebeschicht 3 direkt auf den Träger 4 aufgetragen, und zwar so, dass der Klebstoff 3, wie beschrieben, keinen Film bildet und definiert in den Träger 4 eindringt. Nach dem Trocknen der beiden Lagen bzw. Kunststoffaufträge durch Wasserentfernung werden die Lagen des wärmeaktivierbaren Polyurethanklebers mittels Wärme und Druck zu einer Schicht verbunden.

Es ist ferner vorgesehen, dass der erfindungsgemäße Formatzuschnitt keinen Weichmacher enthalten soll. Die bekannten Neoprene enthalten eine hohen Anteil an Naphthen-Weichmacheröl als Weichmacher. Bei Taucheranzügen, also im Wasser, kommt es zu keiner Migration. Bei dem erfindungsgemäßen Aufgabengebiet, z.B. der Schuhherstellung, der Innenausstattung von Fahrzeugen usw., würden Weichmacher emigrieren und Foggingprobleme verursachen. Die aus der DE-A1 bekannte Fertigungsweise erlaubt es wegen der CO2-Emissionsgesetzen schließlich nicht, die Produkte in der Fahrzeugindustrie einzusetzen.

Ferner können erfindungsgemäße Strukturierung, wie Kohlenstoffgewebe, Glasfasergewebe, Nubukoberflächen nicht auf einem Trennpapier hergestellt werden und schon gar nicht mit einem Polyurethanfilm, der aus einer Polyurethanlösung gebildet wurde, der eine Dicke zwischen 0,01 - 0,05 mm aufweist. Die Strukturerhöhungen und -vertiefungen sind in der Regel stärker als der aus der DE-A1 bekannte Film. Dass ein Beschichtungsfilm in der Dicke von weniger als 0,05 mm keine Verschleißfestigkeit erfüllt, wie sie für Schuhe und Fahrzeuge gefordert wird, liegt auf der Hand.

Aus der DE 39 018 19 A2 ist ein Schaum bekannt, der mit einer Reaktionsharzbeschichtung versehen ist. Das Material ist hart und brüchig.

Gemäß der DE 10 2008 000 419 A1 soll ein Material mit einer extrem hohen Wasserdampfdurchlässigkeit geschaffen werden. Dies wird dadurch erreicht, indem durchgehende Kapillaren ausgebildet werden, die alle Schichten durchdringen. Eine Verwendung von Chloroprenschäumen ist nicht vorgesehen.

Die Einsatzgebiete des erfindungsgemäßen Formatzuschnittes sind vielfältig. Es ist von Vorteil, wenn mit einem erfindungsgemäßen Formatzuschnitt Gegenstände in Form von Kraftfahrzeuginnenausstattungen, Motorrad-, Fahrrad- oder Reitsätteln, Sitzen, Liegebänken, medizinischen Stühlen oder Liegen, Objektmöbelbezügen, Kinderwagen, Sicherheits- und Sportschuhen, Taschen oder Taschen für Notebooks, Handys, Fotoapparate und andere stoßempfindliche Geräte oder von Schutzbekleidung und Teile von Schutzbekleidung für den Katastrophenschutz sowie für Fischer, Sportler oder Feuerwehrleute hergestellt werden.

Es hat sich gezeigt, dass der Formatzuschnitt zum Abdecken von Airbagzonen bei Innenverkleidungen im Auto große Vorteile bietet. Insbesondere die Ausführung, bei welcher auf der Rückseite ein textiler Träger 7 vorhanden ist, kann eine programmierte Sollbruchstelle, z.B. mittels Laser, einfach geschaffen werden, ohne dass der textile Träger 4, der mit der Beschichtung 2 verbunden ist, beschädigt wird.

Es hat sich gezeigt, dass die Mitverwendung von Mikroholkugeln in der Beschichtung 2 und/oder in der Kleberschicht 3 vorteilhaft ist. Mit einem Volumenanteil zwischen 3 bis 24 % wirken diese nicht nur gewichtsreduzierend, sondern verbessern auch die Haptik. Die Mikroholkugeln können aus Kunststoff vorzugsweise aber aus Glas, bestehen und eine Größe zwischen 5 bis 65 µm aufweisen. Durch die Mitverwendung von Mikroholkugeln aus Glas wird auch das Brennverhalten der Beschichtung 2 verbessert.

Es ist von Vorteil, wenn der textile Träger 4 und/oder das textile Material 7 schwer entflammbar ausgerüstet sind.

Letztlich betrifft die Erfindung auch die Verwendung von Formatzuschnitten nach einem der Ansprüche 1 bis 19 zur Herstellung dieser genannten Gegenstände.

## Patentansprüche

1. Mehrschichtiger Formatzuschnitt, umfassend eine dünne, Kapillaren aufweisende Beschichtung (2) auf Polyurethanbasis, die mittels einer Polyurethankleberschicht (3) mit einem textilen Träger (4), der eine textile Trägerschicht ist, die mit einem Gewirke, Gewebe oder Vlies gebildet ist, verbunden ist, **dadurch gekennzeichnet,**
- **dass** der Träger (4) eine Stärke zwischen 0,25 und 1,2 mm besitzt,
- **dass** die verfestigte Polyurethankleberdispersion (3) ein Flächengewicht zwischen 65 und 155 g/m² aufweist und zwischen 0,02 und 0,55 mm in den Träger (4) eingelagert und an den textilen Fasern nicht filmbildend angebunden oder angelagert ist, sondern diese lediglich teilweise bis ganz ummantelt,
- **dass** die Beschichtung (2) eine Dicke von 0,09 bis 0,21 mm und eine Härte zwischen 25 und 55 Shore A aufweist,
- **dass** der Träger (4) an seiner der Beschichtung (2) gegenüberliegenden Seite mit einer Schicht (5) aus Polychloroprenschaum verbunden ist, der eine moosgummiartige, geschlossenzellige Struktur aufweist und eine Dichte zwischen 0,05 und 0,42 g/cm³, vorzugsweise zwischen 0,06 bis 0,28 g/cm³ besitzt wobei die Schicht (5) eine Stärke zwischen 1,0 und 4,5 mm besitzt und mit einem Polychloropren und/oder Polyurethan enthaltenden Klebstoff oder direkt bei ihrer Herstellung an dem Träger (4) angebunden ist.

2. Mehrschichtiger Formatzuschnitt nach Anspruch 1, **dadurch gekennzeichnet, dass** die Beschichtung (2) mit einer auf einer oberflächenstrukturierten Silikonkautschukunterlage strukturierten Polyurethendispersion gebildet ist.

3. Mehrschichtiger Formatzuschnitt nach Anspruch 1 oder 2, **dadurch gekennzeichnet, dass** an der Unterseite der Schicht (5) eine dünne homogene Haut (6) aus dem gleichen Material wie die Schicht (5) mit einer Stärke zwischen 0,01 und 0,06 mm angebunden ist, oder dass an der Unterseite der Schicht (5) eine textile Schicht (7) mit einer Stärke zwischen 0,15 und 0,95 mm angebunden ist.

4. Mehrschichtiger Formatzuschnitt nach einem der Ansprüche 1 bis 3, **dadurch gekennzeichnet, dass** die Beschichtung (2) zwischen 55 und 95 Gew.-%, vorzugsweise zwischen 68 und 87 Gew.-%, eine verfestigte, vernetzte Polyurethandispersion enthält und gegebenenfalls eine Dichte zwischen 0,9 und 1,12 g/cm³ aufweist.

5. Mehrschichtiger Formatzuschnitt nach einem der Ansprüche 1 bis 4, **dadurch gekennzeichnet, dass** der Träger (5) synthetische und/oder natürliche Fasern umfasst und gegebenenfalls elastomere Fasern enthält.

6. Mehrschichtiger Formatzuschnitt nach einem der Ansprüche 1 bis 5, **dadurch gekennzeichnet, dass** die Beschichtung (2) Pigment- und/oder Silikonpartikel enthält.

7. Mehrschichtiger Formatzuschnitt nach einem der Ansprüche 1 bis 6, dass die Oberfläche der Beschichtung (2) das Aussehen von Narben- oder Nubukleder oder das Aussehen von Textilien oder ein technisches Aussehen, vorzugsweise von Sandpapier oder von einem Waffelmuster, oder das Aussehen von direkt oder indirekt in eine Silikonkautschukunterlage gelaserten Strukturen und/oder von Logos oder von Kohlenstoffgewebe, insbesondere mit Darstellung der Faserfeinstruktur zeigt.

8. Mehrschichtiger Formatzuschnitt nach einem der Ansprüche 1 bis 7, **dadurch gekennzeichnet, dass** zumindest zwei der unterschiedlichen Schichten (2, 3, 4, 5, 6) unterschiedliche Farben aufweisen.

9. Mehrschichtiger Formatzuschnitt nach einem der Ansprüche 1 bis 8, **dadurch gekennzeichnet, dass** die Oberfläche des Formatzuschnittes unterschiedlich strukturiert ist und gegebenenfalls einen nubuklederartiges und einen kohlenstoffgewebeartiges Aussehen aufweisenden Bereich umfasst.

10. Mehrschichtiger Formatzuschnitt nach einem der Ansprüche 1 bis 9, **dadurch gekennzeichnet, dass** im Formatzuschnitt Mikroperforationen ausgebildet sind, derart dass der Formatzuschnitt wasserdampf- und/oder luftdurchlässig aber trotzdem wasserdicht ist.

11. Mehrschichtiger Formatzuschnitt nach einem der Ansprüche 1 bis 10, **dadurch gekennzeichnet, dass** der Formatzuschnitt abhängig von der Stärke der Schicht (5) eine Dichte zwischen 0,20 und 0,65 g/cm³ aufweist.

12. Mehrschichtiger Formatzuschnitt nach einem der Ansprüche 1 bis 11, **dadurch gekennzeichnet, dass** die Polyurethanklebeschicht (3) zweilagig ausgebildet ist, wobei eine Lage (3a) auf die Rückseite der Beschichtung (2) und die andere Lage (3b) auf den Träger (4), vorzugsweise mit einer Walze oder durch Sprühen, aufgetragen ist, und die beiden Lagen (3a, 3b) mittels Wärme und Druck verbunden sind.

13. Mehrschichtiger Formatzuschnitt nach einem der Ansprüche 1 bis 12, **dadurch gekennzeichnet, dass** die Beschichtung (2) frei von Weichmachern ist.

14. Mehrschichtiger Formatzuschnitt nach einem der Ansprüche 1 bis 13, **dadurch gekennzeichnet, dass** die in der Beschichtung (2) ausgebildeten, insbesondere sichtbaren, Kapillaren K auf der Rückseite der Beschichtung (2) durch die auf diese aufgebrachte Lage der Polyurethanklebeschicht (3) abgeschlossen sind.

15. Mehrschichtiger Formatzuschnitt nach einem der Ansprüche 1 bis 14, **dadurch gekennzeichnet, dass** die Beschichtung (2) Silikon und/oder Silikonpartikel, gegebenenfalls in einem Ausmaß von 1 bis 15 %, vorzugsweise 2 bis 11 %, des Gewichtes der Beschichtung (2) enthält, wobei das Silikon und/oder die Silikonpartikel als Emulsion und/oder Dispersion in der Beschichtung (2) vorliegen.

16. Mehrschichtiger Formatzuschnitt nach einem der Ansprüche 1 bis 15, **dadurch gekennzeichnet, dass** die Polyurethanklebeschicht (3) mit einer wässrigen Polyurethandispersion gebildet ist, die im vernetzten Zustand eine Härte von weniger als 45 Shore A, vorzugsweise weniger als 35 Shore A, besitzt.

17. Mehrschichtiger Formatzuschnitt nach einem der Ansprüche 1 bis 16, **dadurch gekennzeichnet, dass** die Polyurethanklebeschicht (3) eine amorphe Struktur besitzt.

18. Mehrschichtiger Formatzuschnitt nach einem der Ansprüche 1 bis 17, **dadurch gekennzeichnet, dass** die Beschichtung (2) und/oder die Kleberschicht (3) einen Volumenanteil von 3 bis 24 % Mikroholkugeln aus Kunststoffaufweist und dass diese eine Größe von 5 bis 65 µm besitzen.

19. Mehrschichtiger Formatzuschnitt nach einem der Ansprüche 1 bis 18, **dadurch gekennzeichnet, dass** der textile Träger (4) und/oder das textile Material (7) schwer entflammbar ausgerüstet sind.

20. Mit einem mehrschichtigen, wasserdichten Formatzuschnitt nach einem der Ansprüche 1 bis 19 gebildete Gegenstände in Form von Kraftfahrzeuginnenausstattungen, Motorrad-, Fahrrad- oder Reitsätteln, Sitzen, Liegebänken, medizinischen Stühlen oder Liegen, Objektmöbelbezügen, Kinderwagen, Sicherheits- und Sportschuhen, Taschen oder Taschen für Notebooks, Handys, Fotoapparate und andere stoßempfindliche Geräte oder von Schutzbekleidung und Teile von Schutzbekleidung für den Katastrophenschutz sowie für Fischer, Sportler oder Feuerwehrleute und/oder Verwendung von Formatzuschnitten nach einem der Ansprüche 1 bis 17 zur Herstellung dieser Gegenstände.

## Claims

1. Multilayered cut-to-size format comprising a thin capillary coating (2) based on polyurethane and bonded via a polyurethane adhesive layer (3) to a textile backing (4) which is a textile backing layer formed using a loop-formingly knitted fabric, a woven fabric or a fibrous nonwoven web, **characterized in that**
- the backing (4) has a thickness between 0.25 and 1.2 mm,
- the solidified polyurethane adhesive dispersion (3) has a basis weight between 65 and 155 g/m² and reaches by between 0.02 and 0.55 mm into the backing (4) and is not filmingly bound or attached to the textile fibers, instead merely sheathing them wholly or partly,
- the coating (2) has a thickness of 0.09 to 0.21 mm and a hardness between 25 and 55 Shore A,
- the backing (4) is bonded on its side opposite the coating (2) to a layer (5) of polychloroprene foam which has a closed-cell structure of the foam rubber type and a density between 0.05 and 0.42 g/cm³, preferably between 0.06 to 0.28 g/cm³, wherein the layer (5) has a thickness between 1.0 and 4.5 mm and is bound to the backing (4) with an adhesive containing polychloroprene and/or polyurethane or directly in the course of its production.

2. Multilayered cut-to-size format according to Claim 1, **characterized in that** the coating (2) is formed using a polyurethane dispersion patterned on a surface-patterned silicone rubber support.

3. Multilayered cut-to-size format according to Claim 1 or 2, **characterized in that** the bottom side of layer (5) has bound to it a thin homogeneous skin (6) of the same material as layer (5) with a thickness between 0.01 and 0.06 mm, or **in that** the bottom side of layer (5) has a textile layer (7) between 0.15 and 0.95 mm in thickness bound to it.

4. Multilayered cut-to-size format according to any of Claims 1 to 3, **characterized in that** the coating (2) contains between 55 and 95 wt% and preferably between 68 and 87 wt% of a solidified, crosslinked polyurethane dispersion and optionally has a density between 0.9 and 1.12 g/cm³.

5. Multilayered cut-to-size format according to any of Claims 1 to 4, **characterized in that** the backing (4) comprises synthetic and/or natural fibers with or without elastomeric fibers.

6. Multilayered cut-to-size format according to any of Claims 1 to 5, **characterized in that** the coating (2) contains pigment particles and/or silicone particles.

7. Multilayered cut-to-size format according to any of Claims 1 to 6, **characterized in that** the surface of coating (2) displays the appearance of grained or nubuck leather or the appearance of textiles or a technical appearance, preferably of sandpaper or of a waffle pattern, or the appearance of patterns lasered directly or indirectly into a silicone rubber support, and/or of logos or of carbon fabric, especially with depiction of fibrous fine structuring.

8. Multilayered cut-to-size format according to any of Claims 1 to 7, **characterized in that** at least two of the different layers (2, 3, 4, 5, 6) have different colors.

9. Multilayered cut-to-size format according to any of Claims 1 to 8, **characterized in that** the surface of the cut-to-size format is differentially patterned and optionally includes a region having a nubuck leather type and a carbon-fabric type appearance.

10. Multilayered cut-to-size format according to any of Claims 1 to 9, **characterized in that** there are microperforations in the cut-to-size format such that the cut-to-size format is permeable to water vapor and/or air yet waterproof.

11. Multilayered cut-to-size format according to any of Claims 1 to 10, **characterized in that** the cut-to-size format has a density between 0.20 and 0.65 g/cm³ depending on the thickness of layer (5).

12. Multilayered cut-to-size format according to any of Claims 1 to 11, **characterized in that** the polyurethane adhesive layer (3) has a two-ply configuration wherein one ply (3a) has been applied to the reverse side of coating (2) and the other ply (3b) has been applied to the backing (4), preferably using a roll or by spraying, and the two plies (3a, 3b) are bonded together using heat and pressure.

13. Multilayered cut-to-size format according to any of Claims 1 to 12, **characterized in that** the coating (2) is free of plasticizers.

14. Multilayered cut-to-size format according to any of Claims 1 to 13, **characterized in that** the more particularly visible capillaries K in the coating (2) are sealed off on the reverse side of coating (2) by the there applied ply of polyurethane adhesive layer (3).

15. Multilayered cut-to-size format according to any of Claims 1 to 14, **characterized in that** the coating (2) contains silicone and/or silicone particles, optionally at from 1 to 15% and preferably from 2 to 11% of the weight of coating (2), wherein the silicone and/or the silicone particles form an emulsion and/or dispersion in coating (2).

16. Multilayered cut-to-size format according to any of Claims 1 to 15, **characterized in that** the polyurethane adhesive layer (3) is formed using an aqueous polyurethane dispersion which in the crosslinked state has a hardness of less than 45 Shore A and preferably less than 35 Shore A.

17. Multilayered cut-to-size format according to any of Claims 1 to 16, **characterized in that** the polyurethane adhesive layer (3) has an amorphous structure.

18. Multilayered cut-to-size format according to any of Claims 1 to 17, **characterized in that** the coating (2) and/or the adhesive layer (3) have a 3 to 24% volume fraction of hollow microspheres in plastic, and **in that** these are from 5 to 65 µm in size.

19. Multilayered cut-to-size format according to any of Claims 1 to 18, **characterized in that** the textile backing (4) and/or the textile material (7) have low flammability.

20. Articles produced from a multilayered, waterproof cut-to-size format according to any of Claims 1 to 19, in the form of automotive interior trim, motorbike, bicycle or riding saddles, seats, recamieres, medical chairs or beds, contract furniture covers, perambulators, safety and sports shoes, bags or holders for notebooks, cell phones, cameras and other shock-sensitive equipment, or of protective apparel and parts of protective apparel for disaster control and also for fishermen and women, sportsmen and women or fire-fighters, and/or use of cut-to-size formats according to any of Claims 1 to 17 to produce these articles.

## Revendications

1. Découpe au format multicouche, comprenant un revêtement mince (2) comprenant des capillaires, à base de polyuréthane, qui est relié par une couche adhésive en polyuréthane (3) avec un support textile (4), qui est une couche support textile formée avec un tricot, un tissu ou un non-tissé, **caractérisée en ce que**
- le support (4) présente une épaisseur comprise entre 0,25 et 1,2 mm,
- la dispersion d'adhésif de polyuréthane solidifiée (3) présente un poids surfacique compris entre 65 et 155 g/m² et est incorporée entre 0,02 et 0,55 mm dans le support (4) et n'est pas reliée ou attachée aux fibres textile en formant un film, mais plutôt uniquement en enrobant celles-ci en partie à en totalité,
- le revêtement (2) présente une épaisseur de 0,09 à 0,21 mm et une dureté comprise entre 25 et 55 Shore A,
- le support (4) est relié sur son côté opposé au revêtement (2) avec une couche (5) en mousse de polychloroprène, qui présente une structure à cellules fermées de type caoutchouc cellulaire et une densité comprise entre 0,05 et 0,42 g/cm³, de préférence entre 0,06 et 0,28 g/cm³, la couche (5) présentant une épaisseur comprise entre 1,0 et 4,5 mm et étant attachée au support (4) avec un adhésif contenant du polychloroprène et/ou du polyuréthane ou directement lors de sa fabrication.

2. Découpe au format multicouche selon la revendication 1, **caractérisée en ce que** le revêtement (2) est formé par une dispersion de polyuréthane structurée sur une sous-couche en caoutchouc de silicone structurée en surface.

3. Découpe au format multicouche selon la revendication 1 ou 2, **caractérisée en ce qu'**une peau homogène mince (6) en le même matériau que la couche (5), d'une épaisseur comprise entre 0,01 et 0,06 mm, est attachée sur le côté inférieur de la couche (5), ou **en ce qu'**une couche textile (7) d'une épaisseur comprise entre 0,15 et 0,95 mm est attachée sur le côté inférieur de la couche (5).

4. Découpe au format multicouche selon l'une quelconque des revendications 1 à 3, **caractérisée en ce que** le revêtement (2) contient entre 55 et 95 % en poids, de préférence entre 68 et 87 % en poids, d'une dispersion de polyuréthane réticulée solidifiée, et présente éventuellement une densité comprise entre 0,9 et 1,12 g/cm³.

5. Découpe au format multicouche selon l'une quelconque des revendications 1 à 4, **caractérisée en ce que** le support (4) comprend des fibres synthétiques et/ou naturelles et contient éventuellement des fibres élastomères.

6. Découpe au format multicouche selon l'une quelconque des revendications 1 à 5, **caractérisée en ce que** le revêtement (2) contient des particules de pigment et/ou de silicone.

7. Découpe au format multicouche selon l'une quelconque des revendications 1 à 6, **caractérisée en ce que** la surface du revêtement (2) présente l'apparence d'un cuir fleur ou nubuck, ou l'apparence de textiles, ou une apparence technique, de préférence de papier de verre ou d'un nid d'abeilles, ou l'apparence de structures formées par laser directement ou indirectement dans une sous-couche en caoutchouc de silicone, et/ou de logos ou de tissus carbonés, notamment avec figuration de la structure fine des fibres.

8. Découpe au format multicouche selon l'une quelconque des revendications 1 à 7, **caractérisée en ce qu'**au moins deux des différentes couches (2, 3, 4, 5, 6) présentent des couleurs différentes.

9. Découpe au format multicouche selon l'une quelconque des revendications 1 à 8, **caractérisée en ce que** la surface de la découpe au format est structurée différemment et comprend éventuellement une zone présentant une apparence de type cuir nubuck et une de type tissu carboné.

10. Découpe au format multicouche selon l'une quelconque des revendications 1 à 9, **caractérisée en ce que** des microperforations sont formées dans la découpe au format, de sorte que la découpe au format soit perméable à la vapeur d'eau et/ou à l'air, mais cependant étanche à l'eau.

11. Découpe au format multicouche selon l'une quelconque des revendications 1 à 10, **caractérisée en ce que** la découpe au format présente selon l'épaisseur de la couche (5) une densité comprise entre 0,20 et 0,65 g/cm³.

12. Découpe au format multicouche selon l'une quelconque des revendications 1 à 11, **caractérisée en ce que** la couche adhésive de polyuréthane (3) est configurée bicouche, une couche (3a) étant appliquée sur le côté arrière du revêtement (2) et l'autre couche (3b) sur le support (4), de préférence avec un cylindre ou par pulvérisation, et les deux couches (3a, 3b) étant reliées par de la chaleur et de la pression.

13. Découpe au format multicouche selon l'une quelconque des revendications 1 à 12, **caractérisée en ce que** le revêtement (2) est exempt de plastifiants.

14. Découpe au format multicouche selon l'une quelconque des revendications 1 à 13, **caractérisée en ce que** les capillaires K formés dans le revêtement (2), notamment visibles, sont fermés sur le côté arrière du revêtement (2) par la couche adhésive de polyuréthane (3) appliquée sur celui-ci.

15. Découpe au format multicouche selon l'une quelconque des revendications 1 à 14, **caractérisée en ce que** le revêtement (2) contient de la silicone et/ou des particules de silicone, éventuellement en une proportion de 1 à 15 %, de préférence de 2 à 11 %, du poids du revêtement (2), la silicone et/ou les particules de silicone se présentant sous la forme d'une émulsion et/ou d'une dispersion dans le revêtement (2).

16. Découpe au format multicouche selon l'une quelconque des revendications 1 à 15, **caractérisée en ce que** la couche adhésive de polyuréthane (3) est formée avec une dispersion aqueuse de polyuréthane, qui présente à l'état réticulé une dureté de moins de 45 Shore A, de préférence de moins de 35 Shore A.

17. Découpe au format multicouche selon l'une quelconque des revendications 1 à 16, **caractérisée en ce que** la couche adhésive de polyuréthane (3) présente une structure amorphe.

18. Découpe au format multicouche selon l'une quelconque des revendications 1 à 17, **caractérisée en ce que** le revêtement (2) et/ou la couche adhésive (3) présentent une proportion volumique de 3 à 24 % de microbilles creuses en plastique et **en ce que** celles-ci présentent une taille de 5 à 65 µm.

19. Découpe au format multicouche selon l'une quelconque des revendications 1 à 18, **caractérisée en ce que** le support textile (4) et/ou le matériau textile (7) sont traités pour être difficilement inflammables.

20. Articles formés avec une découpe au format multicouche étanche à l'eau selon l'une quelconque des revendications 1 à 19, sous la forme d'habillages intérieurs d'automobiles, de selles de motocycles, de bicyclettes ou de cheval, de sièges, de bancs longs, de sièges ou de lits médicaux, de garnitures de meubles, de poussettes, de chaussures de sécurité et de sport, de sacs ou d'étuis pour ordinateurs portables, téléphones portables, appareils photos et autres appareils sensibles aux chocs, ou de vêtements de protection et de parties de vêtements de protection pour la protection contre les catastrophes, ainsi que pour les pêcheurs, les sportifs ou les sapeurs-pompiers, et/ou utilisation de découpes au format selon l'une quelconque des revendications 1 à 17 pour la fabrication de ces articles.
